# EUROPEAN PATENT APPLICATION

(11) **EP 4 787 988 A1**
(43) Date of publication of application: **05.08.2026**
(21) Application number: 23953522.2
(22) Date of filing: 27.09.2023
(51) Int. Cl.: H04W 64/00

(54) **REPORTING METHOD AND APPARATUS, COMMUNICATION DEVICE, COMMUNICATION SYSTEM AND STORAGE MEDIUM**

(71) Applicant: Beijing Xiaomi Mobile Software Co., Ltd., Beijing 100085 (CN)
(72) Inventor: TAO, Xuhua, Beijing 100085 (CN)
(74) Representative: Dehns Germany Partnerschaft mbB
(86) International application number: PCT/CN2023/122125
(87) International publication number: WO 2025/065368

(57) **Abstract**

The present disclosure provides a reporting method and apparatus, a device and a storage medium. The method comprises: a terminal receives configuration information sent by a network device, the configuration information being used for configuring a report resolution stride corresponding to carrier phase measurement; and the terminal reports a measurement report to the network device on the basis of the report resolution stride, the measurement report being used for indicating a measurement result corresponding to the carrier phase measurement of the terminal. According to the method of the present disclosure, a carrier phase measurement result can be successfully reported, and smooth execution of the carrier phase positioning process is ensured.

## Description

### TECHNICAL FIELD

The disclosure relates to a field of communication technologies, in particular to a reporting method, a reporting apparatus, a communication device, a communication system and a storage medium.

### BACKGROUND

In a new radio (NR) system, in order to improve accuracy of positioning methods, carrier phase positioning (CPP) is usually used for device positioning.

### SUMMARY

The disclosure provides a reporting method, a reporting apparatus, a communication device, a communication system and a storage medium.

According to a first aspect, the embodiments of the disclosure provide a reporting method. The method includes:
receiving, by a terminal, configuration information sent by a network device, in which the configuration information is used to configure a reporting resolution step for carrier phase measurement; and
sending, by the terminal, a measurement report to the network device based on the reporting resolution step, in which the measurement report indicates a measurement result corresponding to the carrier phase measurement of the terminal.

According to a second aspect, the embodiments of the disclosure provide a reporting method. The method includes:
sending, by a network device, configuration information to a terminal, in which the configuration information is used to configure a reporting resolution step for carrier phase measurement; and
receiving, by the network device, a measurement report sent by the terminal based on the reporting resolution step, in which the measurement report indicates a measurement result corresponding to the carrier phase measurement of the terminal.

According to a third aspect, the embodiments of the disclosure provide a reporting method. The reporting method is configured in a communication system. The communication system includes a network device and a terminal. The method includes at least one of:
sending, by the network device, configuration information to the terminal, in which the configuration information is used to configure a reporting resolution step for carrier phase measurement; and
sending, by the terminal, a measurement report to the network device based on the reporting resolution step, in which the measurement report indicates a measurement result corresponding to the carrier phase measurement of the terminal.

According to a fourth aspect, the embodiments of the disclosure provide a terminal. The terminal includes:
a receiving module, configured to receive configuration information sent by a network device, in which the configuration information is used to configure a reporting resolution step for carrier phase measurement; and
a sending module, configured to send a measurement report to the network device based on the reporting resolution step, in which the measurement report indicates a measurement result corresponding to the carrier phase measurement of the terminal.

According to a fifth aspect, the embodiments of the disclosure provide a network device. The network device includes:
a sending module, configured to send configuration information to a terminal, in which the configuration information is used to configure a reporting resolution step for carrier phase measurement; and
a receiving module, configured to receive a measurement report sent by the terminal based on the reporting resolution step, in which the measurement report indicates a measurement result corresponding to the carrier phase measurement of the terminal.

According to a sixth aspect, the embodiments of the disclosure provide a communication device. The communication device includes:
one or more processors;
in which the one or more processors are configured for calling instructions to cause the communication device to implement the reporting method of the first aspect or the reporting method of the second aspect.

According to a seventh aspect, the embodiments of the disclosure provide a communication system. The communication system includes a terminal and a network device. The terminal is configured to implement the reporting method of the first aspect, and the network device is configured to implement the reporting method of the second aspect.

According to an eighth aspect, the embodiments of the disclosure provide a storage medium having instructions stored thereon. When the instructions are executed by a communication device, the communication device is caused to implement the reporting method of the first aspect or the reporting method of the second aspect.

### BRIEF DESCRIPTION OF THE DRAWINGS

The above and/or additional aspects and advantages of the disclosure will be apparent and easily understood from the following embodiments described in combination with the accompanying drawings, in which:
FIG. 1 is a schematic structural diagram of a communication system provided by an embodiment of the disclosure.
FIGS. 2A-2B are schematic diagrams of interactive of a reporting method provided by an embodiment of the disclosure.
FIGS. 3A-3C are flowcharts of a reporting method provided by another embodiment of the disclosure.
FIGS. 4A-4C are flowcharts of a reporting method provided by yet another embodiment of the disclosure.
FIG. 5A is a flowchart of a reporting method provided by an embodiment of the disclosure.
FIG. 6A is a schematic structural diagram of a terminal provided by an embodiment of the disclosure.
FIG. 6B is a schematic structural diagram of a network device provided by an embodiment of the disclosure.
FIG. 7A is a schematic structural diagram of a communication device provided by an embodiment of the disclosure.
FIG. 7B is a schematic structural diagram of a chip provided by an embodiment of the disclosure.

### DETAILED DESCRIPTION

Embodiments of the disclosure provide a reporting method, a reporting apparatus, a communication device, a communication system and a storage medium.

According to a first aspect, embodiments of the disclosure provide a reporting method. The method is performed by a terminal and includes:
receiving, by the terminal, configuration information sent by a network device, in which the configuration information is used to configure a reporting resolution step for carrier phase measurement; and
sending, by the terminal, a measurement report to the network device based on the reporting resolution step, in which the measurement report indicates a measurement result corresponding to the carrier phase measurement of the terminal.

In the above embodiments, the network device configures the reporting resolution step corresponding to the carrier phase measurement to the terminal, so that the terminal may successfully send the measurement result corresponding to the carrier phase measurement based on the reporting resolution step. Therefore, the carrier phase measurement result is sent successfully, thus ensuring smooth execution of CPP.

In combination with some embodiments of the first aspect, in some embodiments, receiving the configuration information sent by the network device includes:
sending first information to the network device, in which the first information indicates an optimal measurement quality that is able to be achieved in a case of the terminal performing the carrier phase measurement; and
receiving the configuration information sent by the network device based on the first information, in which the reporting resolution step configured by the configuration information is related to the phase quality indicated by the first information.

In combination with some embodiments of the first aspect, in some embodiments, receiving the configuration information sent by the network device includes:
sending a capability of the terminal to the network device; and
receiving the configuration information sent by the network device based on the capability of the terminal.

In combination with some embodiments of the first aspect, in some embodiments, the capability of the terminal includes at least one of:
a sampling rate of the terminal for a reference signal;
a fast Fourier transform (FFT) size corresponding to the terminal;
a subcarrier width of a reference signal supported by the terminal; or
a bandwidth of a reference signal supported by the terminal.

In the above embodiment, the network device may update the reporting resolution step corresponding to the carrier phase measurement for the terminal based on the optimal phase quality and/or the capability of the terminal, so that the reporting resolution step configured by the network device for the terminal always matches the measurement quality and/or the capability of the terminal. Therefore, the accuracy of reporting is ensured when the network device reports based on the reporting resolution step, so that the accuracy of CPP is further ensured. Moreover, since a reporting overhead of the terminal varies as the reporting resolution step changes, by matching the reporting resolution step configured by the network device for the terminal with the phase quality and/or the capability of the terminal, additional reporting costs may be avoided, thus saving resources.

In combination with some embodiments of the first aspect, in some embodiments, different types of measurement results correspond to different value ranges, respectively, different types of measurement results correspond to at least one first list, different first lists correspond to different reporting resolution steps, and each of the at least one first list includes at least one of:
at least one subset obtained by dividing a value range of a measurement result corresponding to the first list according to a reporting resolution step corresponding to the first list; or
an index corresponding to each subset.

In combination with some embodiments of the first aspect, in some embodiments, sending the measurement report to the network device based on the reporting resolution step, includes:
determining the measurement result corresponding to the carrier phase measurement of the terminal;
determining a target first list corresponding to the reporting resolution step configured by the configuration information;
determining a target subset to which the measurement result corresponding to the carrier phase measurement of the terminal belongs in the target first list; and
generating the measurement report based on an index corresponding to the target subset and sending the measurement report to the network device.

In combination with some embodiments of the first aspect, in some embodiments, the measurement result includes at least one of the following:
a reference signal carrier phase (RSCP); or
a RSCP difference (RSCPD).

In the above embodiments, a method for the terminal to report the measurement result corresponding to the carrier phase measurement to the network device based on the reporting resolution step is provided, so that the terminal may successfully send the measurement result corresponding to the carrier phase measurement based on this method, thus ensuring the smooth execution of CPP.

According to a second aspect, the embodiments of the disclosure provide a reporting method. The method is performed by a network device and includes:
sending, by a network device, configuration information to a terminal, in which the configuration information is used to configure a reporting resolution step for carrier phase measurement; and
receiving, by the network device, a measurement report sent by the terminal based on the reporting resolution step, in which the measurement report indicates a measurement result corresponding to the carrier phase measurement of the terminal.

In the above embodiments, the network device configures the reporting resolution step corresponding to the carrier phase measurement to the terminal, so that the terminal may successfully send the measurement result corresponding to the carrier phase measurement based on the reporting resolution step, thus realizing successful reporting of the carrier phase measurement result and ensuring smooth execution of CPP.

In combination with some embodiments of the second aspect, in some embodiments, sending the configuration information to the terminal includes:
receiving first information sent by the terminal, in which the first information indicates an optimal measurement quality that is able to be achieved in a case of the terminal performing the carrier phase measurement; and
sending configuration information to the terminal based on the first information, in which the reporting resolution step configured by the configuration information is related to the phase quality indicated by the first information.

In combination with some embodiments of the second aspect, in some embodiments, sending the configuration information to the terminal includes:
receiving a capability of the terminal sent by the terminal; and
sending the configuration information to the terminal based on the capability of the terminal.

In combination with some embodiments of the second aspect, in some embodiments, the capability of the terminal includes at least one of:
a sampling rate of the terminal for a reference signal;
a FFT size corresponding to the terminal;
a subcarrier width of a reference signal supported by the terminal; or
a bandwidth of a reference signal supported by the terminal.

In combination with some embodiments of the second aspect, in some embodiments, different types of measurement results correspond to different value ranges, respectively, different types of measurement results correspond to at least one first list, different first lists correspond to different reporting resolution steps, and each of the at least one first list includes at least one of:
at least one subset obtained by dividing a value range of a measurement result corresponding to the first list according to a reporting resolution step corresponding to the first list; or
an index corresponding to each subset.

In combination with some embodiments of the second aspect, in some embodiments, sending the measurement report to the network device based on the reporting resolution step, includes:
determining the measurement result corresponding to the carrier phase measurement of the terminal;
determining a target first list corresponding to the reporting resolution step configured by the configuration information;
determining a target subset to which the measurement result corresponding to the carrier phase measurement of the terminal belongs in the target first list; and
generating the measurement report based on an index corresponding to the target subset and sending the measurement report to the network device.

In combination with some embodiments of the second aspect, in some embodiments, the measurement result includes at least one of:
an RSCP; or
an RSCPD.

According to a third aspect, the embodiments of the disclosure provide a reporting method. The reporting method is configured in a communication system. The communication system includes a network device and a terminal. The method includes at least one of:

The communication system includes the network device and the terminal. The method includes at least one of:
sending, by the network device, configuration information to the terminal, in which the configuration information is used to configure a reporting resolution step for carrier phase measurement; or
sending, by the terminal, a measurement report to the network device based on the reporting resolution step, in which the measurement report indicates a measurement result corresponding to the carrier phase measurement of the terminal.

According to a fourth aspect, the embodiments of the disclosure provide a terminal. The terminal includes:
a receiving module, configured to receive configuration information sent by a network device, in which the configuration information is used to configure a reporting resolution step for carrier phase measurement; and
a sending module, configured to send a measurement report to the network device based on the reporting resolution step, in which the measurement report indicates a measurement result corresponding to the carrier phase measurement of the terminal.

In combination with some embodiments of the fourth aspect, in some embodiments, the receiving module is further configured to:
send first information to the network device, in which the first information indicates an optimal measurement quality that is able to be achieved in a case of the terminal performing the carrier phase measurement; and
receive the configuration information sent by the network device based on the first information, in which the reporting resolution step configured by the configuration information is related to the phase quality indicated by the first information.

In combination with some embodiments of the fourth aspect, in some embodiments, the receiving module is further configured to:
send a capability of the terminal to the network device; and
receive the configuration information sent by the network device based on the capability of the terminal.

In combination with some embodiments of the fourth aspect, in some embodiments, the capability of the terminal includes at least one of:
a sampling rate of the terminal for a reference signal;
a FFT size corresponding to the terminal;
a subcarrier width of a reference signal supported by the terminal; or
a bandwidth of a reference signal supported by the terminal.

In combination with some embodiments of the fourth aspect, in some embodiments, different types of measurement results correspond to different value ranges, respectively, different types of measurement results correspond to at least one first list, different first lists correspond to different reporting resolution steps, and each of the at least one first list includes at least one of:
at least one subset obtained by dividing a value range of a measurement result corresponding to the first list according to a reporting resolution step corresponding to the first list; or
an index corresponding to each subset.

In combination with some embodiments of the fourth aspect, in some embodiments, the sending module is further configured to:
determine the measurement result corresponding to the carrier phase measurement of the terminal;
determine a target first list corresponding to the reporting resolution step configured by the configuration information;
determine a target subset to which the measurement result corresponding to the carrier phase measurement of the terminal belongs in the target first list; and
generate the measurement report based on an index corresponding to the target subset and send the measurement report to the network device.

In combination with some embodiments of the fourth aspect, in some embodiments, the measurement result includes at least one of:
an RSCP; or
an RSCPD.

According to a fifth aspect, the embodiments of the disclosure provide a network device. The network device includes:
a sending module, configured to send configuration information to a terminal, in which the configuration information is used to configure a reporting resolution step for carrier phase measurement; and
a receiving module, configured to receive a measurement report sent by the terminal based on the reporting resolution step, in which the measurement report indicates a measurement result corresponding to the carrier phase measurement of the terminal.

In combination with some embodiments of the fifth aspect, in some embodiments, the sending module is further configured to:
receive first information sent by the terminal, in which the first information indicates an optimal measurement quality that is able to be achieved in a case of the terminal performing the carrier phase measurement; and
send configuration information to the terminal based on the first information, in which the reporting resolution step configured by the configuration information is related to the phase quality indicated by the first information.

In combination with some embodiments of the fifth aspect, in some embodiments, the sending module is further configured to:
receive a capability of the terminal sent by the terminal; and
send the configuration information to the terminal based on the capability of the terminal.

In combination with some embodiments of the fifth aspect, in some embodiments, the capability of the terminal includes at least one of:
a sampling rate of the terminal for a reference signal;
a FFT size corresponding to the terminal;
a subcarrier width of a reference signal supported by the terminal; or
a bandwidth of a reference signal supported by the terminal.

In combination with some embodiments of the fifth aspect, in some embodiments, different types of measurement results correspond to different value ranges, respectively, different types of measurement results correspond to at least one first list, different first lists correspond to different reporting resolution steps, and each of the at least one first list includes at least one of:
at least one subset obtained by dividing a value range of a measurement result corresponding to the first list according to a reporting resolution step corresponding to the first list; or
an index corresponding to each subset.

In combination with some embodiments of the fifth aspect, in some embodiments, the measurement result includes at least one of:
an RSCP; or
an RSCPD.

According to a sixth aspect, the embodiments of the disclosure provide a communication device. The communication device includes: one or more processors, and one or more memories used for storing instructions. The processor is configured to call the instructions to cause the communication device to implement the reporting method of the first aspect, the optional implementations of the first aspect, the reporting method of the second aspect or the optional implementations of the second aspect.

According to a seventh aspect, the embodiments of the disclosure provide a communication system. The communication system includes a terminal and a network device. The terminal is configured to implement the reporting method of the first aspect and the optional implementations of the first aspect, and the network device is configured to implement the reporting method of the second aspect and the optional implementations of the second aspect.

According to an eighth aspect, the embodiments of the disclosure provide a storage medium having instructions stored thereon. When the instructions are executed by a communication device, the communication device is caused to implement the reporting method of the first aspect, the optional implementations of the first aspect, the reporting method of the second aspect or the optional implementations of the second aspect.

According to a ninth aspect, the embodiments of the disclosure provide a program product. When the program product is executed by a communication device, the communication device is caused to implement the reporting method of the first aspect, the optional implementations of the first aspect, the reporting method of the second aspect or the optional implementations of the second aspect.

According to a tenth aspect, the embodiments of the disclosure provide a computer program. When the computer program is executed by a computer, the computer is caused to implement the reporting method of the first aspect, the optional implementations of the first aspect, the reporting method of the second aspect or the optional implementations of the second aspect.

It is understood that the above terminal, network device, communication device, communication system, storage medium, program product and computer program are all used to implement the methods provided in the embodiments of the disclosure. Therefore, the beneficial effects they can achieve can refer to the beneficial effects in the corresponding methods, which will not be repeated here.

The embodiments of the disclosure provide a title of invention. In some embodiments, terms "reporting method", "information processing method", "information sending method" and "information receiving method" are interchangeable, and terms "communication apparatus", "information sending apparatus" and "information receiving apparatus" are interchangeable. Moreover, terms "information processing system", "communication system", "information sending system" and "information receiving system" are interchangeable.

Not all of the embodiments of the disclosure are provided in the disclosure, only some embodiments are illustrated below and they are not taken as specific limitations on the protection scope of the disclosure. Without contradiction, in an embodiment, each step may be implemented as an independent embodiment, and steps can be combined arbitrarily. For example, any solution after removing some steps in the embodiment may be implemented as an independent embodiment. The steps in the embodiment may be performed in different orders, and optional implementations of the embodiment can be combined arbitrarily. In addition, the embodiments of the disclosure may also be combined arbitrarily. For example, some or all the steps of different embodiments can be combined arbitrarily, and each embodiment can be arbitrarily combined with optional implementations of other embodiments.

In the embodiments of the disclosure, unless there are special explanations and/or logical conflicts, terms and/or descriptions of the embodiments are consistent and can refer to each other. Technical features in different embodiments can be combined as new embodiments according to their inherent logical relations.

Terms used in the embodiments of the disclosure are only for the purpose of describing specific embodiments, and are not considered as limitations to the disclosure.

In the embodiments of the disclosure, unless otherwise specified, an element expressed in a singular form through "a", "an" "the" "the above", "said", "the above described" or "this", is interpreted as that there is "one and only one", "one or more" or "at least one" of such element. For example, when an article, e.g., "a", "an" or "the" in English, is used in translation, a noun after the article can be interpreted in a singular form or in a plural form.

In the embodiments of the disclosure, "a plurality of" refers to "two or more".

In some embodiments, terms "at least one of", "one or more", "a plurality of" and "multiple" are interchangeable.

In the embodiments of the disclosure, descriptions such as "at least one of A, B or C" and "A and/or B and/or C" include A, B or C, or any combinations of A, B and C. Each case is independent. For example, "at least one of A, B or C" includes A, B, C, A+B, A+C, B+C, and A+B+C. For example, "A and/or B" includes A, B, and A+B.

In some embodiments, descriptions such as "in one case A, while in another case B", and "in response to one case A, while in response to another case B" may be used in the following technical solutions depending on the specific conditions: in some embodiments, A is executed independent of B; in some embodiments, B is executed independent of A; in some embodiments, A and B are selectively executed; and in some embodiments, A and B are both executed. The same applies when there are more branches such as A, B and C.

The prefixes such as "first" and "second" in the embodiments of the disclosure are used only for distinguishing different objects. The prefix is not intended to limit the position, order, priority, quantity or content of a certain object. The description of the object can refer to related contexts in the descriptions of the claims and the embodiments, and should not constitute unnecessary limitations because of the use of prefix. For example, when describing a "field", the prefixes "first" and "second" in "first field" and "second field" do not indicate the positions or orders of the two fields or whether the "first field" and "second field" are in the same message or not, nor do they define the sequence of the "first field" and "second field". For another example, when describing a "level", the prefixes "first" and "second" in "first level" and "second level" do not limit the priorities of the levels. Moreover, an ordinal number used to describe an object does not limit the quantity of the object, and it is possible that there are one or more of such object. Taking "first device" as an example, there may be one or more "first devices". In addition, objects with different prefixes may refer to the same object or different objects. For example, when describing a "device", "first device" and "second device" may refer to the same device or different devices, or may refer to the same device type or different device types. When describing "information", "first information" and "second information" may refer to the same information or different information, or may refer to the same content or different contents.

In some embodiments, "comprising A", "containing A", "used to indicate A" and "carrying A" may be interpreted as "directly carrying A" or "indirectly indicating A".

In some embodiments, terms "in response to", "in response to determining", "in the case of", "when", "while", "if" and "assuming that" are interchangeable.

In some embodiments, terms "greater than", "greater than or equal to", "more than" "more than or equal to", "higher than", "higher than or equal to", "no less than", "no lower than" and "above" are interchangeable. Moreover, terms "less than", "less than or equal to", "lower than", "lower than or equal to", "smaller than", "smaller than or equal to", "no greater than", "no higher than" and "below" are interchangeable.

In some embodiments, the device may be interpreted as physical or virtual, and its name is not limited to those listed in the embodiments. Terms "device", "equipment", "device", "circuit", "network element", "node", "function", "unit", "section", "system", "network", "chip", "chip system", "entity" and "object" are interchangeable.

In some embodiments, "network" may be interpreted as a device included in the network, such as an access network device and a core network device.

In some embodiments, terms "access network (AN) device", "radio AN (RAN) device", "base station (BS)", "radio BS", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "carrier", "component carrier" and "bandwidth part (BWP)" are interchangeable.

In some embodiments, terms "terminal", "terminal device", "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client" and "client" are interchangeable.

In some embodiments, "AN device", "CN device" or "network device" may be replaced by "terminal". For example, the embodiments of the disclosure may be applied to a structure in which communications between the AN device, CN device or network device and the terminal is replaced by communications between terminals (for example, it can also be called device-to-device (D2D) communications or vehicle-to-everything (V2X) communications). In this case, the terminal may have all or part of the functions of the AN device. Moreover, terms "uplink" and "downlink" may also be replaced with a term corresponding to communications between terminals (for example, "side"). For example, uplink channel and downlink channel are replaced by side channels, and uplink and downlink are replaced by sidelink.

In some embodiments, the terminal can be replaced by an AN device, a CN device, or a network device. In this case, the AN device, CN device or network device may have all or part of the functions of the terminal.

In some embodiments, data and information are obtained by means comply with the laws and regulations of the host country.

In some embodiments, data and information are obtained with the consent of users.

In addition, each element, row or column in the tables of the embodiments of the disclosure may be implemented as an independent embodiment, or any combination of elements, rows and columns may be implemented as an independent embodiment.

The correspondences shown in the tables in the disclosure may be configured or predefined. The values of information in the tables are merely examples and may be configured to other values, which are not limited in the disclosure. In configuring the correspondences between information and parameters, it is not necessarily required that all the correspondences illustrated in the tables must be configured. For example, correspondences illustrated in certain rows in the tables of the disclosure may not be configured. For another example, the above tables may be adjusted appropriately, such as splitting, combining, and the like. The names of parameters shown in the titles of the above tables may be other names understandable by the communication device, and the values or representations of parameters may be other values or representations understandable by the communication device. Each of the above tables may also be implemented with other data structures, such as, arrays, queues, containers, stacks, linear tables, pointers, chained lists, trees, graphs, structures, classes, heaps, and Hash tables.

The term "predefine" in the disclosure may be understood as define, pre-define, store, pre-store, pre-negotiate, pre-configure, solidify, or pre-fire.

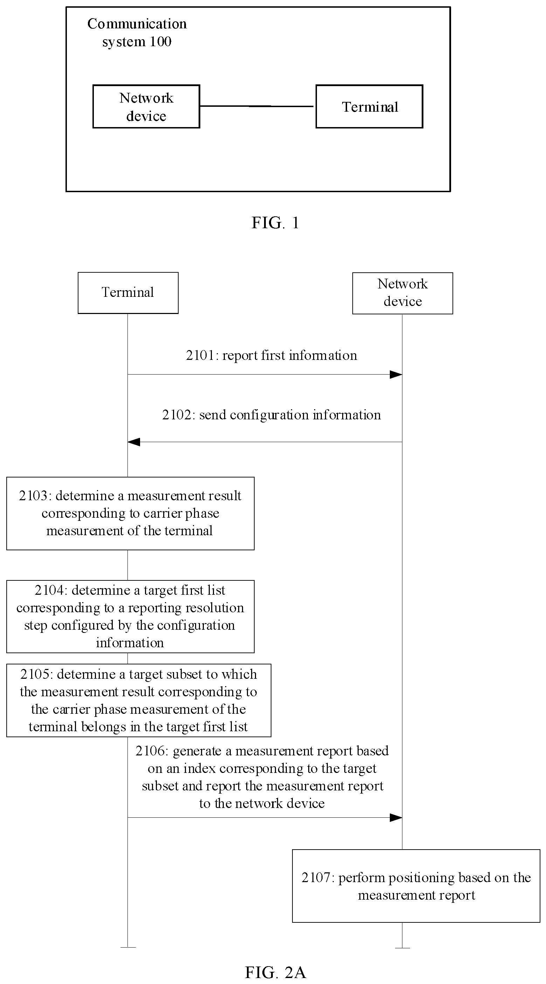

FIG. 1 is a schematic structural diagram of a communication system provided by an embodiment of the disclosure. As illustrated in FIG. 1, the communication system 100 includes at least one of a network device or a terminal. The network device includes at least one of an AN device or a CN device.

In some embodiments, the terminal includes at least one of a mobile phone, a wearable device, an Internet of Things (IoT) device, a car with communication functions, a smart car, a Pad, a computer with wireless transceiver functions, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city or a wireless terminal in smart home, which is not limited herein.

In some embodiments, the AN device may be a node or a device that connects the terminal to a wireless network. The AN device includes at least one of an evolved Node B (eNB) in a 5th generation (5G) mobile communication system, a next generation eNB (ng-eNB), a next generation NodeB (gNB), a node B (NB), a home NB (HNB), a home eNB (HeNB), a wireless backhaul equipment, a radio network controller (RNC), a BS controller (BSC), a base transceiver station (BTS), a base band unit (BBU), a mobile switching center, a BS in a 6th generation (6G) mobile communication system, an Open RAN, a Cloud RAN, a BS in other communication systems, or an access node in a wireless fidelity (Wi-Fi) system, which is not limited here.

In some embodiments, the technical solution of the disclosure is applied to the Open RAN. In this case, interfaces between AN devices or interfaces within an AN device involved in the embodiments of the disclosure may be used as internal interfaces of the Open RAN. The procedures and information interactions between these internal interfaces are implemented by software or programs.

In some embodiments, the AN device is composed of a central unit (CU) and distributed units (DUs), and the CU may also be referred to as a control unit. The use of CU-DU structure allows to divide a protocol layer of the AN device, such that some functions of the protocol layer are placed in the CU for centralized control, and some or all of the remaining functions of the protocol layer are distributed in the DUs that are centrally controlled by the CU, which is not limited here.

In some embodiments, the core network device may be a device, including one or more network elements, or a plurality of devices or device groups, each including some or all of the one or more network elements. The network element may be virtual or physical. The core network includes at least one of an evolved packet core (EPC), a 5G core network (CN) or a next generation core (NGC). Or, the CN device may be a location management network element. For example, the location management network element includes a location server, which can be implemented as any one of the following: a location management function (LMF), an enhanced serving mobile location centre (E-SMLC), a secure user plane location (SUPL) and a SUPL location platform (SUPLLP).

It is understandable that to clearly illustrate the technical solution of the embodiments of the disclosure, its applicable communication system is introduced first in the embodiments of the disclosure, which does not constitute as a limitation to the technical solution provided by the embodiments of the disclosure. Those skilled in the art understand that as system architectures evolve and new business scenarios emerge, the technical solution provided by the embodiments of the disclosure is also applicable to similar technical problems.

The following embodiments of the disclosure are applied to the entire or a portion of the communication system 100 in FIG. 1, which is not limited herein. The entities shown in FIG. 1 are examples. The communication system may include all or part of the entities in FIG. 1, and may also include entities not shown in FIG. 1. The quantity and form of each entity are arbitrary. The connection relationships between these entities are illustrated as examples. For example, these entities may or may not be connected. If these entities are connected, they may be connected by any means, e.g., directly or indirectly, and in a wired manner or wirelessly.

The embodiments of the disclosure may be applied to long-term evolution (LTE), LTE-Advanced (LTE-A), LTE-Beyond (LTE-B), SUPER 3G, IMT-Advanced, 4th generation (4G) mobile communication system, 5G, 5G NR, future radio access (FRA), new-radio access technology (RAT), NR, new radio access (NX), future generation radio access (FX), global system for mobile communications (GSM (registered trademark)), CDMA2000, ultra mobile broadband (UMB), IEEE 802.11(Wi-Fi (registered trademark)), IEEE 802.16 (WiMAX (registered trademark)), IEEE 802.20, ultra-wideband (UWB), Bluetooth (registered trademark), public land mobile network (PLMN), Device-to-Device (D2D) system, Machine to Machine (M2M) system, IoT system, Vehicle-to-Everything (V2X), systems using other reporting methods or their next generation systems. In addition, the above systems may be combined for applications, such as a combination of LTE/LTE-A and 5G.

In an example, for CPP, a sender sends a reference signal (for example, a downlink positioning reference signal (DL PRS) or an uplink sounding reference signal (UL SRS) to a receiver. The receiver performs carrier phase measurement on the reference signal to obtain a carrier phase measurement result (i.e., a measurement result corresponding to the carrier phase measurement), and reports the carrier phase measurement result to the sender. Then, the sender performs positioning based on the carrier phase measurement result. If the receiver is a terminal, when the terminal sends the carrier phase measurement result to the network device, it is usually based on a reporting resolution step. The reporting resolution step is introduced in detail in the following.

In an example, different types of measurement results correspond to at least one different reporting resolution step, and different types of measurement results correspond to different value ranges. At least one mapping table corresponding to the measurement result may be obtained based on a value range corresponding to the measurement result and different reporting resolution steps. Different mapping tables correspond to different reporting resolution steps. The mapping table includes: at least one subset obtained by dividing the value range of the measurement result corresponding to the mapping table according to the reporting resolution step corresponding to the mapping table; and an index corresponding to each subset.

For example, different types of measurement results may include: an RSCP or an RSCPD. The RSCP is taken as an example to introduce the above mapping table and the reporting resolution step.

In an example, for example, a value range of the RSCP is [0°, 360°], if the RSCP corresponds to two reporting resolution steps, which are 1° and 10°, respectively, the RSCP may correspond to two mapping tables, which correspond to the reporting resolution step 1° and the reporting resolution step 10°, respectively. The mapping table corresponding to the reporting resolution step 1° includes: at least one subset obtained by dividing the value range of the RSCP, [0°, 360°], according to the reporting resolution step 1°, and an index corresponding to each subset. For example, the at least one subset includes: [0°, 1°], (1°, 2°], (2°, 3°], ..., (359°, 360°]. An index corresponding to [0°, 1°] may be RSCP_0, an index corresponding to (1°, 2°] may be RSCP_1, and an index corresponding to (2°, 3°] may be RSCP_2, and the like.

In an example, the mapping table corresponding to the reporting resolution step 10° includes: at least one subset obtained by dividing the value range of the RSCP, [0°, 360°], according to the reporting resolution step 10°, and an index corresponding to each subset. For example, the at least one subset includes: [0°, 10°], (10°, 20°], (20°, 30°], ..., (350°, 360°]. An index corresponding to [0°, 10°] may be RSCP_0, an index corresponding to (10°, 20°] may be RSCP_1, and tanhe index corresponding to (20°, 30°] may be RSCP_2, and the like.

In an example, for example, a value range of the RSCPD may [-180°, 180°], it may be divided into at least one mapping table by a method similar to the above method for the RSCP. Different mapping tables correspond to different reporting resolution steps, which may not be repeated here.

In an example, when at least one mapping table is set for each type of measurement result, the terminal may report an actual measurement result based on a mapping table corresponding to the measurement result and a reporting resolution step during reporting the actual measurement result. For example, the terminal may select one of reporting resolution steps corresponding to the measurement result, determine the subset to which the actual measurement result belongs in the mapping table corresponding to the reporting resolution step, and report the actual measurement result based on an index corresponding to the subset.

For example, if the terminal needs to report the RSCP, an actually measured RSCP is 25°, and a currently selected reporting resolution step is 10°, it is determined that a subset to which an actual measurement result of RSCP (25°) belongs in a mapping table corresponding to the reporting resolution step of 10° is (20°, 30°], and the corresponding index is RSCP_2. In this case, the terminal reports the reporting resolution step of 10° and the index RSCP_2 to the network device, and then the network device determines the actual measurement result of RSCP of the terminal by querying the corresponding mapping table based on the reporting resolution step of 10° and the index RSCP_2.

However, as far as CPP is concerned, there is no definition of how the terminal determines the reporting resolution step when reporting.

FIG. 2A is a schematic diagram illustrating an interaction of a reporting method according to an embodiment of the disclosure. As illustrated in FIG. 2A, an embodiment of the disclosure relates to the reporting method, which is configured in the communication system 100. The method includes the following steps.

At step 2101, a terminal sends first information a network device.

In an example, the network device may receive the first information. The first information may indicate an optimal measurement quality (phase quality) that is able to be achieved in a case of the terminal performing the carrier phase measurement. In an example, the phase quality may be determined by the terminal itself. That is, the terminal may determine the optimal phase quality that is able to be achieved in a case of the terminal performing the carrier phase measurement based on a reference signal carrier width or a reference signal channel quality.

At step 2102, the network device sends configuration information to the terminal, in which the configuration information is configured to configure a reporting resolution step corresponding to the carrier phase measurement.

In an example, the terminal may receive the reporting resolution step sent by the network device, and for a detailed description of the reporting resolution step, reference may be made to the description before the embodiment of FIG. 2A.

In an example, in some embodiments, the network device may send the configuration information to the terminal based on the first information sent by the terminal. In an example, the reporting resolution step configured by the configuration information may be related to the phase quality indicated by the first information. In an example, the reporting resolution step configured by the configuration information may be negatively correlated with the phase quality indicated by the first information. For example, the greater the phase quality indicated by the first information, the smaller the reporting resolution step configured by the network device based on the configuration information. The less the phase quality indicated by the first information, the larger the reporting resolution step configured by the network device based on the configuration information.

In an example, in some embodiments, the method for configuring the reporting resolution step corresponding to the carrier phase measurement with the above configuration information may include at least one of the followings.
(1) The configuration information is used to configure a first parameter, and the first parameter is used to calculate the reporting resolution step corresponding to the carrier phase measurement. That is, the configuration information includes the first parameter for calculating the reporting resolution step. For example, the first parameter may be, for example, k, where the reporting resolution corresponding to the carrier phase measurement step=k×0.1 or = 10^{k}× 0.1.
(2) The configuration information is directly used to configure the reporting resolution step corresponding to the carrier phase measurement. That is, the configuration information directly includes the reporting resolution step corresponding to the carrier phase measurement.

At step 2103, the terminal determines a measurement result corresponding to the carrier phase measurement of the terminal.

In an example, the measurement result corresponding to the carrier phase measurement may be understood as, for example, an actual measurement result obtained after the terminal performs the carrier phase measurement on a reference signal (such as DL PRS).

In an example, the measurement result includes at least one of the following: an RSCP or an RSCPD.

At step 2104, the terminal determines a target first list corresponding to the reporting resolution step configured by the configuration information.

In an example, different types of measurement results correspond to different value ranges, respectively, different types of measurement results correspond to at least one first list, different first lists correspond to different reporting resolution steps, and each of the at least one first list includes at least one of:
at least one subset obtained by dividing a value range of a measurement result corresponding to the first list according to a reporting resolution step corresponding to the first list; or
an index corresponding to each subset.

In an example, the first list may be understood as the above mapping table. The RSCP is taken as an example to introduce the first list and the reporting resolution step.

In an example, for example, a value range of the RSCP is [0°, 360°], if the RSCP corresponds to two reporting resolution steps, which are 1° and 10°, respectively, the RSCP correspond to two first lists, and the two first lists corresponding to the reporting resolution step 1° and the reporting resolution step 10°, i.e., the reporting resolution step 1° corresponds to a first list#1, and the reporting resolution step 10° corresponds to a first list#2. The first list#1 corresponding to the reporting resolution step 1° may include: at least one subset obtained by dividing the value range of the RSCP, [0°, 360°], according to the reporting resolution step 1°, and an index corresponding to each subset. For example, the at least one subset includes: [0°, 1°], (1°, 2°], (2°, 3°], ..., (359°, 360°]. An index corresponding to [0°, 1°] may be RSCP_0, an index corresponding to (1°, 2°] may be RSCP_1, and an index corresponding to (2°, 3°] may be RSCP_2, and the like.

In an example, the first list#2 corresponding to the reporting resolution step 10° may include: at least one subset obtained by dividing the value range of the RSCP, [0°, 360°], according to the reporting resolution step 10°, and an index corresponding to each subset. For example, the at least one subset includes: [0°, 10°], (10°, 20°], (20°, 30°], ..., (350°, 360°]. An index corresponding to [0°, 10°] may be RSCP_0, an index corresponding to (10°, 20°] may be RSCP_1, and an index corresponding to (20°, 30°] may be RSCP_2, and on the like.

For example, assumed that the reporting resolution step configured by the configuration information is 10°, the target first list determined in step 2104 is the first list #2.

In an example, the at least one first list corresponding to different types of measurement results may be pre-agreed based on a protocol.

At step 2105, the terminal determines a target subset to which the measurement result corresponding to the carrier phase measurement of the terminal belongs in the target first list.

For example, assumed that the reporting resolution step configured by the configuration information is 10° and the measurement result of RSCP corresponding to the carrier phase measurement of the terminal is 25°, it is determined that the target subset is (20°, 30°] in the first list#2.

At step 2106, the terminal generates a measurement report based on an index corresponding to the target subset and sends the measurement report to the network device.

In an example, the terminal may directly include the index corresponding to the target subset in the measurement report and send the measurement report to the network device.

For example, when the target subset is (20°, 30°] in the first list#2, the terminal may directly include RSCP_2 in the measurement report and report the measurement report to the network device.

At step 2107, the network device performs positioning based on the measurement report.

In an example, the network device may query the first list corresponding to the measurement result based on the index in the measurement report and the reporting resolution step configured by the network device based on the configuration information, so that the network device knows the measurement result corresponding to the carrier phase measurement of the terminal, and may perform positioning based on the measurement result.

In an example, the method for the network device to query the first list based on the index in the measurement report and the reporting resolution step includes: the network device determining which first list the index belongs based on the reporting resolution step, and then determining a subset (such as any value in the subset) corresponding to the index in the first list as the measurement result corresponding to the carrier phase measurement of the terminal.

The reporting method according to embodiments of the disclosure may include at least one of steps S2101-S2107. For example, step S2101 may be implemented as an independent embodiment, step S2102 may be implemented as an independent embodiment, and steps S2101+S2102 may be implemented as an independent embodiment, which is not limited herein.

In embodiments or implementations, without contradiction, steps may be executed independently, arbitrarily combined or executed in different orders. An embodiment or an implementation may be arbitrarily combined, or may be arbitrarily combined with steps of other implementations or other embodiments.

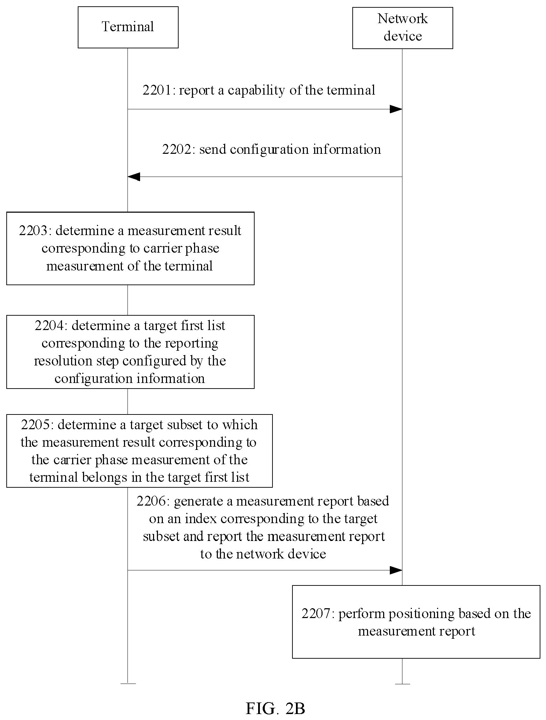

FIG. 2B is a schematic diagram illustrating an interaction of a reporting method according to an embodiment of the disclosure. As illustrated in FIG. 2B, an embodiment of the disclosure relates to the reporting method, which is configured in the communication system 100. The method includes the following steps.

At step 2201, a terminal reports a capability of the terminal (e.g., UE's capability and implementation) to a network device.

In an example, the capability of the terminal includes at least one of the following:
a sampling rate of the terminal for a reference signal;
a FFT size corresponding to the terminal;
a subcarrier width of a reference signal supported by the terminal; or
a bandwidth of a reference signal supported by the terminal.

At step 2202, the network device sends configuration information to the terminal, in which the configuration information is used to configure a reporting resolution step corresponding to carrier phase measurement.

In an example, in some embodiments, the network device sends the configuration information to the terminal based on the capability of the terminal, so that the reporting resolution step configured by the network device to the terminal always matches the capability of the terminal. Therefore, when the network device reports based on the reporting resolution step, accuracy of reporting may be ensured, thus ensuring accuracy of CPP. Moreover, since a reporting overhead of the terminal varies as the reporting resolution step changes, by matching the reporting resolution step configured by the network device for the terminal with the capability of the terminal, additional reporting costs may be avoided, thus saving resources.

Other details about this part may be described with reference to the above embodiments.

At step 2203, the terminal determines a measurement result corresponding to the carrier phase measurement of the terminal.

At step 2204, the terminal determines a target first list corresponding to the reporting resolution step configured by the configuration information.

At step 2205, the terminal determines a target subset to which the measurement result corresponding to the carrier phase measurement of the terminal belongs in the target first list.

At step 2206, the terminal generates a measurement report based on an index corresponding to the target subset and reports measurement report to the network device.

At step 2207, the network device performs positioning based on the measurement report.

For detailed descriptions of steps 2203-2207, reference may be made to the descriptions of the above embodiments.

The reporting method according to embodiments of the disclosure may include at least one of steps S2201-S2202. For example, step S2201 may be implemented as an independent embodiment, step S2202 may be implemented as an independent embodiment, and steps S2201+S2202 may be implemented as an independent embodiment, which is not limited herein.

In embodiments or implementations, without contradiction, steps may be executed independently, arbitrarily combined or executed in different orders. An embodiment or an implementation may be arbitrarily combined, or may be arbitrarily combined with steps of other implementations or other embodiments.

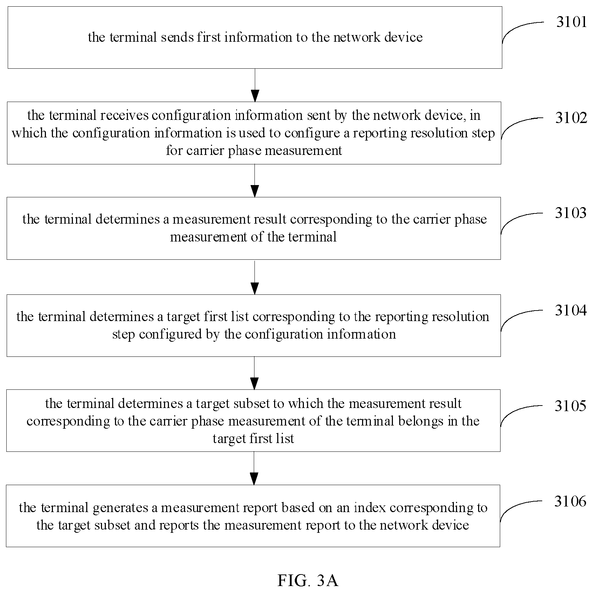

FIG. 3A is a schematic diagram illustrating an interaction of a reporting method according to an embodiment of the disclosure. As illustrated in FIG. 3A, an embodiment of the disclosure relates to the reporting method, which is configured in a terminal. The method includes the following steps.

At step 3101, the terminal sends first information to a network device.

At step 3102, the terminal receives configuration information sent by the network device, in which the configuration information is configured to configure a reporting resolution step corresponding to carrier phase measurement.

At step 3103, the terminal determines a measurement result corresponding to the carrier phase measurement of the terminal.

At step 3104, the terminal determines a target first list corresponding to the reporting resolution step configured by the configuration information.

At step 3105, the terminal determines a target subset to which the measurement result corresponding to the carrier phase measurement of the terminal belongs in the target first list.

At step 3106, the terminal generates a measurement report based on an index corresponding to the target subset and reports the measurement report to the network device.

For detailed descriptions of steps 3101-3106, reference may be made to the descriptions of the above embodiments.

The reporting method according to embodiments of the disclosure may include at least one of steps 3101-3106. For example, step S3101 may be implemented as an independent embodiment, step S3102 may be implemented as an independent embodiment, and steps S3101+S3102 may be implemented as an independent embodiment, which is not limited herein.

In embodiments or implementations, without contradiction, steps may be executed independently, arbitrarily combined or executed in different orders. An embodiment or an implementation may be arbitrarily combined, or may be arbitrarily combined with steps of other implementations or other embodiments.

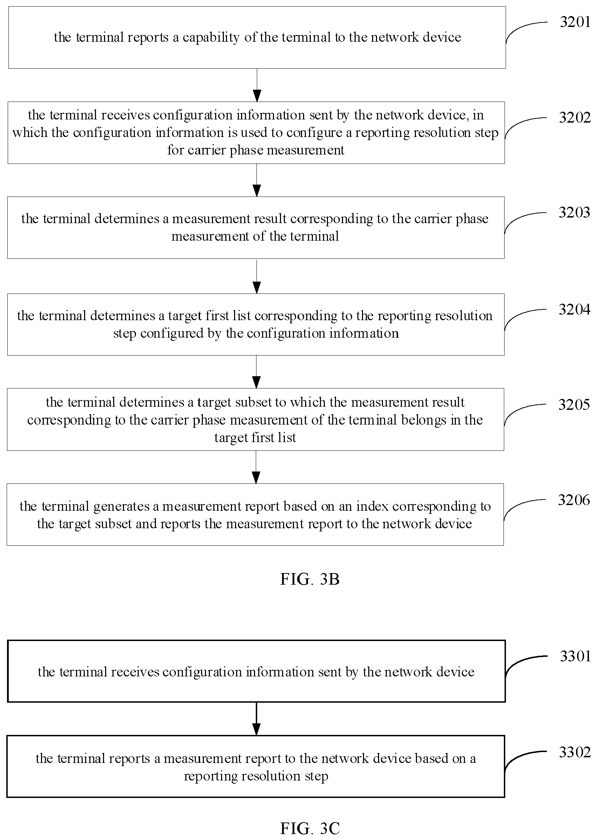

FIG. 3B is a schematic diagram illustrating an interaction of a reporting method according to an embodiment of the disclosure. As illustrated in FIG. 3B, an embodiment of the disclosure relates to the reporting method, which is performed by a terminal. The method includes the following steps.

At step 3201, the terminal reports a capability of the terminal to a network device.

At step 3202, the terminal receives configuration information sent by the network device, in which the configuration information is configured to configure a reporting resolution step corresponding to carrier phase measurement.

At step 3203, the terminal determines a measurement result corresponding to the carrier phase measurement of the terminal.

At step 3204, the terminal determines a target first list corresponding to the reporting resolution step configured by the configuration information.

At step 3205, the terminal determines a target subset to which the measurement result corresponding to the carrier phase measurement of the terminal belongs in the target first list.

At step 3206, the terminal generates a measurement report based on an index corresponding to the target subset and reports the measurement report to the network device.

For detailed descriptions of steps 3201-3206, reference may be made to the descriptions of the above embodiments.

The reporting method according to embodiments of the disclosure may include at least one of steps 3201-3206. For example, step S3201 may be implemented as an independent embodiment, step S3202 may be implemented as an independent embodiment, and steps S3201+S3202 may be implemented as an independent embodiment, which is not limited herein.

In embodiments or implementations, without contradiction, steps may be executed independently, arbitrarily combined or executed in different orders. An embodiment or an implementation may be arbitrarily combined, or may be arbitrarily combined with steps of other implementations or other embodiments.

FIG. 3C is a schematic diagram illustrating an interaction of a reporting method according to an embodiment of the disclosure. As illustrated in FIG. 3C, the embodiment of the disclosure relates to the reporting method, which is performed by a terminal. The method includes the following steps.

At step 3301, the terminal receives configuration information sent by a network device.

At step 3302, the terminal reports a measurement report to the network device based on a reporting resolution step.

In an example, the configuration information is configured to configure the reporting resolution step corresponding to carrier phase measurement.

In an example, the measurement report indicates a measurement result corresponding to the carrier phase measurement of the terminal.

Receiving the configuration information sent by the network device includes:
sending first information to the network device, in which the first information indicates an optimal measurement quality that is able to be achieved in a case of the terminal performing the carrier phase measurement; and
receiving the configuration information sent by the network device based on the first information, in which the reporting resolution step configured by the configuration information is related to the phase quality indicated by the first information.

In an example, receiving the configuration information sent by the network device includes:
sending a capability of the terminal to the network device; and
receiving the configuration information sent by the network device based on the capability of the terminal.

In an example, the capability of the terminal includes at least one of:
a sampling rate of the terminal for a reference signal;
a FFT size corresponding to the terminal;
a subcarrier width of a reference signal supported by the terminal; or
a bandwidth of a reference signal supported by the terminal.

In an example, different types of measurement results correspond to different value ranges, respectively, different types of measurement results correspond to at least one first list, different first lists correspond to different reporting resolution steps, and each of the at least one first list includes at least one of:
at least one subset obtained by dividing a value range of a measurement result corresponding to the first list according to a reporting resolution step corresponding to the first list; or
an index corresponding to each subset.

In an example, sending the measurement report to the network device based on the reporting resolution step includes:
determining the measurement result corresponding to the carrier phase measurement of the terminal;
determining a target first list corresponding to the reporting resolution step configured by the configuration information;
determining a target subset to which the measurement result corresponding to the carrier phase measurement of the terminal belongs in the target first list; and
generating the measurement report based on an index corresponding to the target subset and sending the measurement report to the network device.

In an example, the measurement result includes at least one of:
an RSCP; or
an RSCPD.

For detailed descriptions of steps 3301-3302, reference may be made to the descriptions of the above embodiments.

The reporting method according to embodiments of the disclosure may include at least one of steps 3301-3302. For example, step S3301 may be implemented as an independent embodiment, step S3302 may be implemented as an independent embodiment, and steps S3301+S3302 may be implemented as an independent embodiment, which is not limited herein.

In embodiments or implementations, without contradiction, steps may be executed independently, arbitrarily combined or executed in different orders. An embodiment or an implementation may be arbitrarily combined, or may be arbitrarily combined with steps of other implementations or other embodiments.

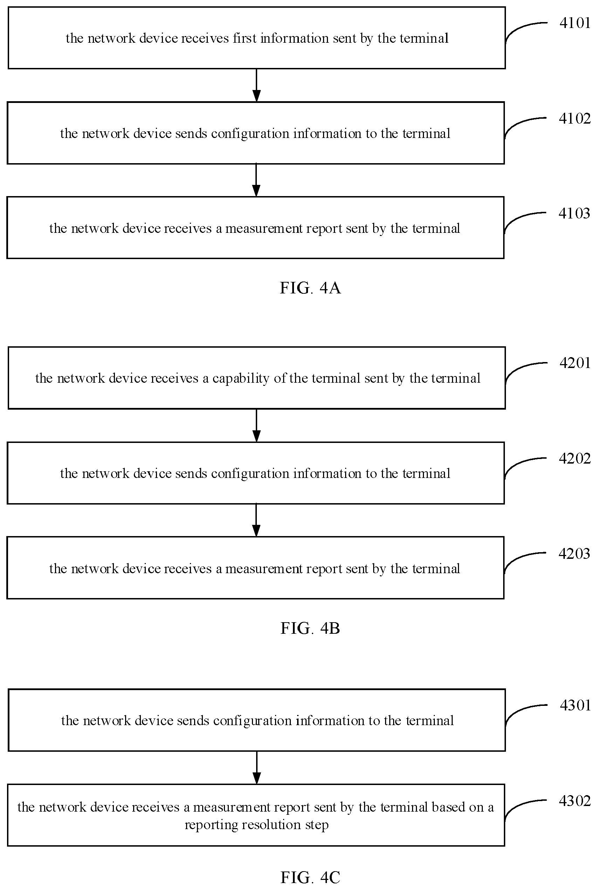

FIG. 4A is a schematic diagram illustrating an interaction of a reporting method according to an embodiment of the disclosure. As illustrated in FIG. 4A, the embodiment of the disclosure relates to the reporting method, which is performed by a network device. The method includes the following steps.

At step 4101, the network device receives first information sent by a terminal.

At step 4102, the network device sends configuration information to the terminal.

At step 4103, the network device receives a measurement report sent by the terminal.

For detailed descriptions of steps 4101-4103, reference may be made to the descriptions of the above embodiments.

The reporting method according to embodiments of the disclosure may include at least one of steps 4101-4103. For example, step S4101 may be implemented as an independent embodiment, step S4102 may be implemented as an independent embodiment, and steps S4101+S4102 may be implemented as an independent embodiment, which is not limited herein.

In embodiments or implementations, without contradiction, steps may be executed independently, arbitrarily combined or executed in different orders. An embodiment or an implementation may be arbitrarily combined, or may be arbitrarily combined with steps of other implementations or other embodiments.

FIG. 4B is a schematic diagram illustrating an interaction of a reporting method according to an embodiment of the disclosure. As illustrated in FIG. 4B, an embodiment of the disclosure relates to the reporting method, which is performed by a network device. The method includes the following steps.

At step 4201, the network device receives a capability of a terminal sent by the terminal.

At step 4202, the network device sends configuration information to the terminal.

At step 4203, the network device receives a measurement report sent by the terminal.

For detailed descriptions of steps 4201-4203, reference may be made to the descriptions of the above embodiments.

The reporting method according to embodiments of the disclosure may include at least one of steps 4201-4203. For example, step S4201 may be implemented as an independent embodiment, step S4202 may be implemented as an independent embodiment, and steps S4201+S4202 may be implemented as an independent embodiment, which is not limited herein.

In embodiments or implementations, without contradiction, steps may be executed independently, arbitrarily combined or executed in different orders. An embodiment or an implementation may be arbitrarily combined, or may be arbitrarily combined with steps of other implementations or other embodiments.

FIG. 4C is a schematic diagram illustrating an interaction of a reporting method according to an embodiment of the disclosure. As illustrated in FIG. 4C, an embodiment of the disclosure relates to the reporting method, which is performed by a network device. The method includes the following steps.

At step 4301, the network device sends configuration information to a terminal.

At step 4302, the network device receives a measurement report sent by the terminal based on a reporting resolution step.

In an example, the configuration information is configured to configure the reporting resolution step corresponding to carrier phase measurement.

In an example, the measurement report indicates a measurement result corresponding to the carrier phase measurement of the terminal.

In an example, sending the configuration information to the terminal includes:
receiving first information sent by the terminal, in which the first information indicates an optimal measurement quality that is able to be achieved in a case of the terminal performing the carrier phase measurement; and
sending configuration information to the terminal based on the first information, in which the reporting resolution step configured by the configuration information is related to the phase quality indicated by the first information.

In an example, sending the configuration information to the terminal includes:
receiving a capability of the terminal sent by the terminal; and
sending the configuration information to the terminal based on the capability of the terminal.

In an example, the capability of the terminal includes at least one of:
a sampling rate of the terminal for a reference signal;
a FFT size corresponding to the terminal;
a subcarrier width of a reference signal supported by the terminal; or
a bandwidth of a reference signal supported by the terminal.

In an example, different types of measurement results correspond to different value ranges, respectively, different types of measurement results correspond to at least one first list, different first lists correspond to different reporting resolution steps, and each of the at least one first list includes at least one of:
at least one subset obtained by dividing a value range of a measurement result corresponding to the first list according to a reporting resolution step corresponding to the first list; or
an index corresponding to each subset.

In an example, the measurement result includes at least one of:
an RSCP; or
an RSCPD.

For detailed descriptions of steps 4301-4302, reference may be made to the descriptions of the above embodiments.

The reporting method according to embodiments of the disclosure may include at least one of steps 4301-4302. For example, step S4301 may be implemented as an independent embodiment, step S4302 may be implemented as an independent embodiment, and steps S4301+S4302 may be implemented as an independent embodiment, which is not limited herein.

In embodiments or implementations, without contradiction, steps may be executed independently, arbitrarily combined or executed in different orders. An embodiment or an implementation may be arbitrarily combined, or may be arbitrarily combined with steps of other implementations or other embodiments.

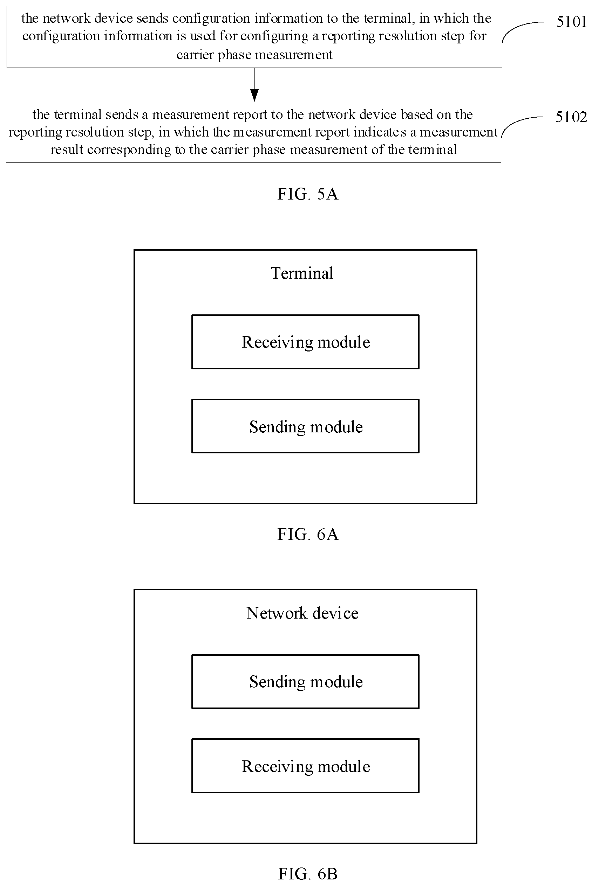

FIG. 5A is a schematic diagram illustrating an interaction of a reporting method according to an embodiment of the disclosure. As illustrated in FIG. 4C, an embodiment of the disclosure relates to the reporting method, which is configured in a communication system including a termina and a network device. The method includes at least one of the following steps.

At step 5101, the network device sends configuration information to the terminal, in which the configuration information is used for configuring a reporting resolution step corresponding to carrier phase measurement.

At step 5102, the terminal sends a measurement report to the network device based on the reporting resolution step, in which the measurement report indicates a measurement result corresponding to the carrier phase measurement of the terminal.

For optional implementations of steps 5101-5102, reference may be made to the descriptions of the above embodiments.

In some embodiments, the above method may include the methods described in the embodiments of the communication system side, the terminal side and the network device side, which may not be repeated here.

The reporting method according to embodiments of the disclosure may include at least one of steps 5101-5102. For example, step S5101 may be implemented as an independent embodiment, and step S5102 may be implemented as an independent embodiment, which is not limited herein.

In embodiments or implementations, without contradiction, steps may be executed independently, arbitrarily combined or executed in different orders. An embodiment or an implementation may be arbitrarily combined, or may be arbitrarily combined with steps of other implementations or other embodiments.

The following is an illustrative introduction to the above method.

In an example, a basic problem of RAN4 is to define measurement report mapping including a reporting granularity and a range. In addition, at the latest RAN1 meeting, the following agreement was reached:
supporting a UE/TRP to report a phase quality indication of RSCP/RSCPD measurement. The phase quality indication includes the following fields:
a phase quality index; and
a phase quality resolution.

For RAN4, values of the phase quality index and the phase quality resolution are reserved.

According to the protocol of RAN1, the phase quality may be indicated to NW. That is, the optimal phase quality that the UE can achieve is variable for different UEs/TRPs. Meanwhile, from the perspective of report mapping, the minimum reporting resolution may be dynamically changed according to UE's capability and implementation (for example, oversampling rate or others).

Observation: If the phase quality is indicated to the NW, it is beneficial to report the measurement result at different resolutions based on the optimal phase quality that the UE can achieve. For example, a total reporting overhead can be reduced without any additional cost for the UE.

Therefore, it suggests that:
a reporting granularity of RSCP/RSCPD is configured according to the phase quality of the UE.

Option 1: the UE performs CPP based on a single sample;
RSCP measurement report

A reporting range of DL RSCP measurement is defined as [0°, 360°], and the resolution step is k*0.1, where kₘᵢₙ≤k≤kₘₐₓ.

When at least one PRS resource of a reference cell and a neighbor cell during RSCP measurement is in FR1, kₘᵢₙ=[first value] and kₘₐₓ=[second value] are configured.

When at least one PRS resource of a reference cell and a neighbor cell during RSCP measurement is in FR2, kₘᵢₙ=[third value] and kₘₐₓ=[fourth value] are configured.

When the LMF configures CPPReportingGranularityFactor for RSTD measurement through LPP, k≥fifth value is configured.

The reporting range of DL RSCPD measurement is defined as [-180°, 180°], and the resolution step is k*0.1, where kₘᵢₙ≤k≤kₘₐₓ.

When at least one PRS resource of a reference cell and a neighbor cell during RSCP measurement is in FR1, kₘᵢₙ=[first value] and kₘₐₓ=[second value] are configured.

When at least one PRS resource of a reference cell and a neighbor cell during RSCP measurement is in FR2, kₘᵢₙ=[third value] and kₘₐₓ=[fourth value] are configured.

In an example, the disclosure provides a method for UE carrier phase positioning (CPP), in which CPP measurement report mapping is configured for different UEs/TRPs.

In an example, the UE may indicate a phase quality of measurement to the NW.

In an example, the granularity of the measurement report is configured according to different UE capabilities and implementations (e.g., oversampling, FFT size and PRS bandwidth).

Embodiments of the disclosure provide an apparatus for implementing any of the above methods. For example, an apparatus is provided, which includes units/modules for implementing steps performed by the terminal in any of the above methods. For another example, another apparatus is provided, which includes units/modules for implementing steps performed by the network device (e.g., AN device, CN functional node or CN device) in any of the above methods.

It should be understood that the units/modules in the apparatus are divided based on their logical functions, and some or all of the above units/modules may be integrated on a physical entity or may be physically separated in practical applications. In addition, the units/modules in the above apparatus may be implemented by software called by a processor that is included in the apparatus and connected to a memory. The memory stores instructions, and the processor calls the instructions stored in the memory to implement any of the above methods or to implement functions of the units/modules in the above apparatus. The processor may be a general-purpose processor, such as a central processing unit (CPU) or a micro-processor, and the memory is a memory in the apparatus or a memory external to the apparatus. Or, the units/modules in the apparatus may be implemented in the form of a hardware circuit. Some or all of the functions of the units/modules may be achieved through the design of the hardware circuit. The hardware circuit may be understood as one or more processors. For example, in an implementation, the hardware circuit is an application-specific integrated circuit (ASIC). In this case, some or all of the functions of the units/modules are achieved through the design of a logical relationship between components in the circuit. In another implementation, the hardware circuit may be implemented through a programmable logic device (PLD), such as a field programmable gate array (FPGA). It includes a large number of logical gates, and their connection relationships are configured through a configuration file to implement some or all of the functions of the above units/modules. All the units/modules of the above apparatus may be implemented entirely through the software called by the processor, or entirely through the hardware circuit, or partially through the software called by the processor and partially through the hardware circuit.

In embodiments of the disclosure, the processor is a circuit having signal processing capabilities. In an implementation, the processor may be a circuit having instruction reading and executing capabilities, such as a CPU, a micro-processor, a graphics processing unit (GPU) (which is understood as a micro-processor), or a digital signal processor (DSP). In another implementation, the processor implements certain functions through the logical relationship of the hardware circuit, which may be fixed or re-configurable. For example, the processor may be a hardware circuit implemented by an ASIC or a PLD, such as a FPGA. For a re-configurable hardware circuit, the procedure for the processor to load the configuration file to configure the hardware circuit is understood as a procedure for the processor to load the instructions to implement some or all of the functions of the above units/modules. In addition, the processor may also be an artificial intelligence (AI)-designed hardware circuit, which is understood as an ASIC, such as a neural network processing unit (NPU), a tensor processing unit (TPU) and a deep learning processing unit (DPU).

FIG. 6A is a schematic structural diagram of a terminal provided by an embodiment of the disclosure. As illustrated in FIG. 6A, the terminal includes:
a receiving module, configured to receive configuration information sent by a network device, in which the configuration information is configured to configure a reporting resolution step for carrier phase measurement; and
a sending module, configured to send a measurement report to the network device based on the reporting resolution step, in which the measurement report indicates a measurement result corresponding to the carrier phase measurement of the terminal.

In an example, the receiving module is configured to perform the steps related to "receiving" executed by the terminal in any of the above methods, and the sending module is used to perform the steps related to "sending" executed by the terminal in any of the above methods. In an example, the terminal also includes a processing module, which is configured to perform the steps related to "processing" executed by the terminal in any of the above methods, which may not be repeated here.

FIG. 6B is a schematic structural diagram of a network device provided by an embodiment of the disclosure. As illustrated in FIG. 6B, the network device includes:
a sending module, configured to send configuration information to a terminal, in which the configuration information is configured to configure a reporting resolution step for carrier phase measurement; and
a receiving module, configured to receive a measurement report sent by the terminal based on the reporting resolution step, in which the measurement report indicates a measurement result corresponding to the carrier phase measurement of the terminal.

In an example, the sending module is configured to perform the steps related to "sending" executed by the network device in any of the above methods, and the receiving module is used to perform the steps related to "receiving" executed by the network device in any of the above methods. In an example, the network device also includes a processing module, which is configured to perform the steps related to "processing" executed by the network device in any of the above methods, which may not be repeated here.

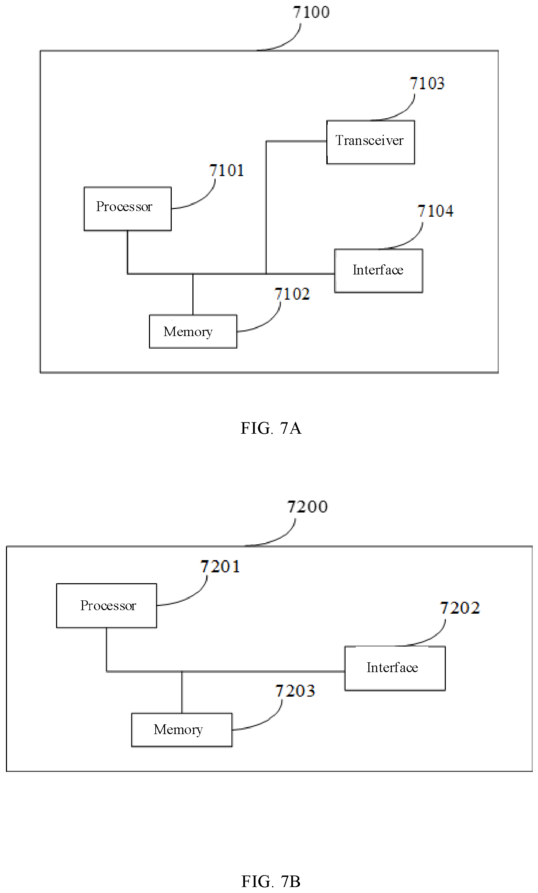

FIG. 7A is a schematic structural diagram of a communication device 7100 provided by an embodiment of the disclosure. The communication device 7100 may be a network device (e.g., an AN device or a CN device), a terminal (e.g., a UE), a chip, chip system or processor that supports the network device to implement any of the above methods, or a chip, chip system or processor that supports the terminal to implement any of the above methods. The communication device 7100 is used to implement the methods described in the above method embodiments, which can refer to the descriptions in the above method embodiments.

As illustrated in FIG. 7A, the communication device 7100 includes one or more processors 7101. The processor 7101 may be a general-purpose processor or a dedicated processor, such as a baseband processor or a central processor. The baseband processor is used to process communication protocols and communication data, while the central processor is used to control the communication device (e.g., a BS, a baseband chip, a terminal, a terminal chip, a DU or a CU), execute programs and process data of the programs. The processor 7101 is used to call instructions to cause the communication device 7100 implement any of the above methods.

In some embodiments, the communication device 7100 further includes one or more memories 7102 for storing instructions. In an example, all or part of the memories 7102 are external to the communication device 7100.

In some embodiments, the communication device 7100 includes one or more transceivers 7103. In this case, the transceiver 7103 performs the communication steps such as transmission and/or reception in the above methods, and the processor 7101 performs other steps.

In some embodiments, the transceiver may include a receiver and a transmitter. The receiver and the transmitter may be separated or integrated together. In an example, terms "transceiver", "transceiver unit", "transceiver machine" and "transceiver circuit" are interchangeable, and terms "transmitter", "transmitting unit", "transmitter machine" and "transmitting circuit" are also interchangeable. In addition, terms "receiver", "receiving unit", "receiver machine" and "receiving circuit" are interchangeable.

In an example, the communication device 7100 further includes one or more interface circuits 7104. The interface circuit 7104 is connected with the memory 7102, and it is used to receive signals from the memory 7102 or other devices and send signals to the memory 7102 or other devices. For example, the interface circuit 7104 can read the instructions stored in the memory 7102 and send the instructions to the processor 7101.

The communication device 7100 described in the above embodiments may be a network device or a terminal. However, the scope of the communication device 7100 is not limited in the disclosure, and the structure of the communication device 7100 is not limited by FIG. 7A. The communication device may be a standalone device or part of a larger device. For example, the communication device may be: (1) a standalone integrated circuit (IC), chip, chip system or sub-system; (2) a collection of one or more ICs (In an example, the collection includes storage components for storing data and programs); (3) an ASIC, such as a modem; (4) a module that can be embedded in other devices; (5) a receiver, a terminal, a smart terminal, a cellular phone, a wireless device, a handheld device, a mobile unit, an in-vehicle device, a network device, a cloud device, an AI device, etc.; or (6) others.

FIG. 7B is a schematic structural diagram of a chip 7200 provided by an embodiment of the disclosure. The case that the communication device 7100 is a chip or chip system can refer to the schematic structural diagram of the chip 7200 shown in FIG. 7B, which is not limited herein.

The chip 7200 includes one or more processors 7201. The processor 7201 is used to call instructions to cause the chip 7200 to implement any of the above methods.

In some embodiments, the chip 7200 includes one or more interface circuits 7202. The interface circuit 7202 is connected to a memory 7203, and it is used to receive signals from the memory 7203 or other devices and send signals to the memory 7203 or other devices. For example, the interface circuit 7202 can read instructions stored in the memory 7203 and send the instructions to the processor 7201. In an example, terms "interface circuit", "interface", "transceiver pin" and "transceiver" are interchangeable.

In some embodiments, the chip 7200 further includes one or more memories 7203 for storing instructions. In an example, all or part of the memories 7203 are external to the chip 7200.

The disclosure also provides a storage medium. The storage medium stores instructions, and when the instructions are executed by the communication device 7100, the communication device 7100 is caused to implement any of the above methods. In an example, the storage medium is an electronic storage medium. In an example, the storage medium may be a computer-readable storage medium or a storage medium readable by other devices, which is not limited herein. In an example, the storage medium may be a non-transitory storage medium or a transitory storage medium, which is not limited herein.

The disclosure also provides a program product. When the program product is executed by the communication device 7100, the communication device 7100 is caused to implement any of the above methods. In an example, the program product is a computer program product.

The disclosure also provides a computer program. When the computer program is executed by a computer, the computer is caused to implement any of the above methods.

The above embodiments may be implemented in whole or in part by software, hardware, firmware, or any combination thereof. When implemented using software, it may be implemented, in whole or in part, in the form of a computer program product. The computer program product includes one or more computer programs. When loading and executing the computer programs on the computer, all or part of processes or functions described in the embodiments of the disclosure are implemented. The computer may be a general-purpose computer, a dedicated computer, a computer network or other programmable devices. The computer program may be stored in a computer-readable storage medium or transmitted from one computer-readable storage medium to another computer-readable storage medium. For example, the computer program may be transmitted from one web site, computer, server or data center to another web site, computer, server or data center, in a wired manner (e.g., by using coaxial cables, fiber optics or digital subscriber lines (DSLs) or wirelessly (e.g., by using infrared wave, wireless wave or microwave). The computer-readable storage medium may be any usable medium accessible by the computer or a data storage device integrated by one or more usable mediums, such as a server and a data center. The usable medium may be a magnetic medium (e.g., a floppy disk, a hard disk and a tape), an optical medium (e.g., a high-density digital video disc (DVD)), or a semiconductor medium (e.g., a solid state disk (SSD)).

Those skilled in the art may realize that units and algorithmic steps of various examples described in combination with the embodiments of the disclosure are capable of being implemented in the form of electronic hardware, or a combination of computer software and electronic hardware. Whether these functions are performed in the form of hardware or software depends on specific application and design constraints of the technical solution. Those skilled in the art may use different methods to implement the described functions for each particular application, but such implementations should not be considered as beyond the scope of the disclosure.

It is clearly understood by those skilled in the field to which it belongs that, for convenience and brevity of description, the specific working processes of the above system, apparatus and unit can refer to the corresponding processes in the above method embodiments, which will not be repeated herein.

Some specific implementations of the disclosure are described above, but the protection scope of the disclosure is not limited thereto. Any technician familiar with the technical field can easily think of changes or substitutions within the technical scope disclosed in the disclosure, and these changes or substitutions should be included in the protection scope of the disclosure. Therefore, the protection scope of the disclosure should be based on the protection scope of the claims.

## Claims

1. A reporting method, comprising:
receiving, by a terminal, configuration information sent by a network device, wherein the configuration information is used to configure a reporting resolution step for carrier phase measurement; and
sending, by the terminal, a measurement report to the network device based on the reporting resolution step, wherein the measurement report indicates a measurement result corresponding to the carrier phase measurement of the terminal.

2. The method of claim 1, wherein receiving the configuration information sent by the network device comprises:
sending first information to the network device, wherein the first information indicates an optimal measurement quality that is able to be achieved in a case of the terminal performing the carrier phase measurement; and
receiving the configuration information sent by the network device based on the first information, wherein the reporting resolution step configured by the configuration information is related to the phase quality indicated by the first information.

3. The method of claim 1, wherein receiving the configuration information sent by the network device comprises:
sending a capability of the terminal to the network device; and
receiving the configuration information sent by the network device based on the capability of the terminal.

4. The method of claim 3, wherein the capability of the terminal comprises at least one of:
a sampling rate of the terminal for a reference signal;
a fast Fourier transform (FFT) size corresponding to the terminal;
a subcarrier width of a reference signal supported by the terminal; or
a bandwidth of a reference signal supported by the terminal.

5. The method of any one of claims 1-4, wherein different types of measurement results correspond to different value ranges, respectively, different types of measurement results correspond to at least one first list, different first lists correspond to different reporting resolution steps, and each of the at least one first list comprises at least one of:
at least one subset obtained by dividing a value range of a measurement result corresponding to the first list according to a reporting resolution step corresponding to the first list; or
an index corresponding to each subset.

6. The method of claim 5, wherein sending the measurement report to the network device based on the reporting resolution step comprises:
determining the measurement result corresponding to the carrier phase measurement of the terminal;
determining a target first list corresponding to the reporting resolution step configured by the configuration information;
determining a target subset to which the measurement result corresponding to the carrier phase measurement of the terminal belongs in the target first list; and
generating the measurement report based on an index corresponding to the target subset and sending the measurement report to the network device.

7. The method of any one of claims 1-6, wherein the measurement result comprises at least one of:
a reference signal carrier phase (RSCP); or
a RSCP difference (RSCPD).

8. A reporting method, comprising:
sending, by a network device, configuration information to a terminal, wherein the configuration information is used to configure a reporting resolution step for carrier phase measurement; and
receiving, by the network device, a measurement report sent by the terminal based on the reporting resolution step, wherein the measurement report indicates a measurement result corresponding to the carrier phase measurement of the terminal.

9. The method of claim 8, wherein sending the configuration information to the terminal comprises:
receiving first information sent by the terminal, wherein the first information indicate an optimal measurement quality that is able to be achieved in a case of the terminal performing the carrier phase measurement; and
sending configuration information to the terminal based on the first information, wherein the reporting resolution step configured by the configuration information is related to the phase quality indicated by the first information.

10. The method of claim 8, wherein sending the configuration information to the terminal comprises:
receiving a capability of the terminal sent by the terminal; and
sending the configuration information to the terminal based on the capability of the terminal.

11. The method of claim 10, wherein the capability of the terminal comprises at least one of:
a sampling rate of the terminal for a reference signal;
a fast Fourier transform (FFT) size corresponding to the terminal;
a subcarrier width of a reference signal supported by the terminal; or
a bandwidth of a reference signal supported by the terminal.

12. The method of any one of claims 8-11, wherein different types of measurement results correspond to different value ranges, respectively, different types of measurement results correspond to at least one first list, different first lists correspond to different reporting resolution steps, and each of the at least one first list comprises at least one of:
at least one subset obtained by dividing a value range of a measurement result corresponding to the first list according to a reporting resolution step corresponding to the first list; or
an index corresponding to each subset.

13. The method of any one of claims 8-12, wherein the measurement result comprises at least one of:
a reference signal carrier phase (RSCP); or
a RSCP difference (RSCPD).

14. A reporting method, configured in a communication system comprising a network device and a terminal, comprising at least one of:
sending, by the network device, configuration information to the terminal, wherein the configuration information is used to configure a reporting resolution step for carrier phase measurement; or
sending, by the terminal, a measurement report to the network device based on the reporting resolution step, wherein the measurement report indicates a measurement result corresponding to the carrier phase measurement of the terminal.

15. A terminal, comprising:
a receiving module, configured to receive configuration information sent by a network device, wherein the configuration information is used to configure a reporting resolution step for carrier phase measurement; and
a sending module, configured to send a measurement report to the network device based on the reporting resolution step, wherein the measurement report indicates a measurement result corresponding to the carrier phase measurement of the terminal.

16. A network device, comprising:
a sending module, configured to send configuration information to a terminal, wherein the configuration information is used to configure a reporting resolution step for carrier phase measurement; and
a receiving module, configured to receive a measurement report sent by the terminal based on the reporting resolution step, wherein the measurement report indicates a measurement result corresponding to the carrier phase measurement of the terminal.

17. A communication device, comprising:
one or more processors;
wherein the one or more processors are configured for calling instructions to cause the communication device to implement the reporting method of any one of claims 1-7 or the reporting method of any one of claims 8-13.

18. A storage medium having instructions stored thereon, wherein when the instructions are executed by a communication device, the communication device is caused to implement the reporting method of any one of claims 1-7 or the reporting method of any one of claims 8-13.
